# EUROPÄISCHE PATENTSCHRIFT

(11) **EP 2 795 115 B1**
(45) Veröffentlichungstag und Bekanntmachung des Hinweises auf die Patenterteilung: **27.07.2016**
(21) Anmeldenummer: 11811010.5
(22) Anmeldetag: 20.12.2011
(51) Int. Cl.: F03D 80/70, F16H 1/28, F16C 17/12, F16C 19/18, F16C 19/38, F16C 33/10

(54) **BLATT- ODER MASCHINENHAUSLAGER EINER WINDKRAFTANLAGE**
BLADE BEARING OR NACELLE BEARING OF A WIND TURBINE
PALIER POUR PALES OU NACELLE D'UNE ÉOLIENNE

(43) Veröffentlichungstag der Anmeldung: 29.10.2014
(73) Patentinhaber: IMO Holding GmbH, 91350 Gremsdorf (DE)
(72) Erfinder: FRANK, Hubertus, 91315 Höchstadt (DE)
(74) Vertreter: Küchler, Stefan
(86) Internationale Anmeldenummer: PCT/EP2011/006428
(87) Internationale Veröffentlichungsnummer: WO 2013/091664

(56) Entgegenhaltungen:
- WO-A1-2009/048403
- DE-A1- 10 003 350
- JP-A- 2006 077 753

## Beschreibung

Die Erfindung richtet sich auf ein Blatt- oder Maschinenhauslager einer Windkraftanlage mit zwei aneinander gelagerten und gegeneinander verdrehbaren, ebenen Ringen zum Anschluß an die Nabe der Windkraftanlage einerseits und an ein Blatt derselben andererseits, oder zum Anschluß am Turm der Windkraftanlage einerseits und an die Gondel derselben andererseits.

Windkraftanlagen stellen extreme Anforderungen an die verwendeten Materialien und Baueinheiten. Denn aufgrund der Bauhöhe sollten die Materialien und Baueinheiten - insbesondere im Bereich von Windrad und Gondel - einerseits möglichst leicht sein, müssen sie doch von dem Turm getragen werden; andererseits sind diese Elemente extremen Kräften ausgesetzt - u.a. Winddruck und Windböen - und müssen daher extrem stabil sein. Besondere Komplikationen resultieren daraus in besonderem Maße im Bereich der Blatt- und Maschinenhauslager, weil diese naturgemäß große Durchmesser aufweisen und aus Gewichtsgründen im Verhältnis dazu geringe Querschnitte, so dass Verformungen nicht ausgeschlossen sind, insbesondere im Fall von Verformungen der daran angeschlossenen Baugruppen. Dies wiederum führt zu ernsten, inneren Verspannungen und dadurch zu einem erhöhten Verschleiß und einer deutlich reduzierten Lebensdauer der betreffenden Lager. Besonders bei Radiallagern, welche bei Blatt- oder Maschinenhauslagern zumeist Verwendung finden, sind radiale Verformungen eines Rings, wobei dessen ideale Kreisform bspw. elliptisch verbogen wird, überaus nachteilig, weil dadurch nicht nur einzelne Wälzkörper des Wälzlagers überlastet werden können, sondern weil auch die den Spalt überdeckende Abdichtung abschnittsweise undicht wird und dann das Schmiermittel entweicht oder gar Feuchtigkeit oder Fremdkörper eindringen können. Andererseits stellt auch die aktive Verschwenken dieser Lager - zwecks Einstellung des Blatt-Anstellwinkels oder der Gondel-Ausrichtung - erhöhte Anforderungen an die dazu verwendete Mechanik, weil aufgrund der großen Massen dabei nicht unbeträchtliche Trägheitskräfte zu überwinden sind. Große Verstellmotoren gehen wiederum einher mit großen Gewichtskräften und sollten daher vermieden werden.

Aus den Nachteilen des beschriebenen Standes der Technik resultiert das die Erfindung initiierende Problem, ein gattungsgemäßes Blatt- oder Maschinenhauslager einer Windkraftanlage derart weiterzubilden, dass zum Verschwenken der angeschlossenen Einheiten möglichst kleine Motoren verwendbar sind; nach Möglichkeit soll dabei die erreichbare Betriebsdauer dieser Lager selbst unter den ungünstigen Betriebsbedingungen im Bereich der Turmspitze einer Windkraftanlage maximal sein.

Die Lösung dieses Problems gelingt durch die der MerKmale gemäß Ansprunch 1.

Eine solche Anordnung wirkt als Getriebe, insbesondere wenn die beiden rundum laufenden Innenverzahnungen unterschiedliche, vorzugsweise aber nur geringfügig voneinander abweichende Zähnezahlen z₁, z₂ aufweisen, also bspw. eine Differenz der Zähnezahlen Δz = |z₁ - z₂| von 10 Zähnen oder weniger, vorzugsweise eine Differenz Δz von 7 Zähnen oder weniger, insbesondere eine Differenz Δz von 3 Zähnen oder weniger.

Wenn - wie die Erfindung weiter vorsieht - die Verzahnung der darin eingreifenden Planetenräder im Bereich beider Verzahnungseinriffe die gleiche Zähnezahl aufweist, so ergibt sich eine Funktionsweise, wobei die beiden Innenverzahnungen - und damit die jene tragenden Ringe - bei einem vollständigen Umlauf eines Planetenrades sich nur um einen Relativdrehwinkel α von (Δz/z₁) * 360° gegeneinander verdrehen. Ein solches Getriebe hat daher eine extreme Drehzahluntersetzung und infolgedessen eine entsprechend große Drehmomentübersetzung. Daher genügt zum Antrieb ein vergleichsweise kleiner Antriebsmotor mit einem geringen Nennmoment. Ein solch kleiner Antriebsmotor spart aber Gewicht.

Es hat sich als günstig erwiesen, dass jeder der beiden Ringe mit je einer Scheibe versehen oder gekoppelt ist, insbesondere mit einer Kreisscheibe. Diese Scheiben, welche vorzugsweise die Fläche radial innerhalb des betreffenden Rings teilweise oder vollständig einnehmen, tragen in nicht unerheblichem Maße zu einer Versteifung des betreffenden Rings - und damit des gesamten, erfindungsgemäßen Lagers - bei. Gerade radialen Verformungen setzt eine solche, in der Lagerebene liegende Scheibe einen maximalen Widerstand entgegen und schützt damit die Abdichtung vor einer eine Leckage des Schmiermittels und dem Eindringen von Feuchtigkeit oder Fremdkörpern. Indem jeder der beiden Ringe, welche - abgesehen vom Verlauf der Verzahnung - jeweils einen gleichbleibenden Querschnittsumfang aufweisen, mit einer solchen Scheibe versehen ist, ist eine gleichbleibende Kreisform jedes Rings gewährleistet, und demzufolge ein die Wälzkörper und deren Laufbahnen schonender Betrieb des betreffenden Lagers sowie eine optimale Dichtwirkung desselben gewährleistet. Die Scheiben können je nach Ausführungsform mit dem betreffenden Ring verschraubt werden, oder verschweißt, vernietet oder auf anderem Wege verbunden. Auch eine Integration von Ring und Scheibe zu einem einzigen Teil wäre möglich, bspw. indem die betreffenden Teile gleichzeitig in einer Gußform aus dem schmelzflüssigen Zustand zu einem Festkörper erstarren.

Indem die beiden Scheiben an einander gegenüber liegenden, ebenen Stirnseiten je eines Ringes festgelegt sind, kommt ihnen überdies eine statisch aussteifende Wirkung zu ähnlich der eines Über- und Unterzugs. Durch diese doppelte Scheibenstruktur ergibt sich somit eine enorme Steifigkeit gegenüber allen angreifenden Kräften. Darüber hinaus wird zwischen den Scheiben ein Hohlraum geschaffen, worin die erfindungsgemäßen Getriebeelemente vor äußeren Einflüssen geschützt untergebracht werden können. Dabei ist eine Unterbrechung einer oder beider Scheiben möglich, sofern dies bspw. zum Durchführen von Bauelementen od. dgl. notwendig ist; eine statische Beeinträchtigung durch begrenzte Ausnehmungen in einer oder beiden Scheiben ist nicht zu befürchten.

Indem die beiden Scheiben parallel zueinander angeordnet sind sowie von der Drehachse des Lagers lotrecht durchsetzt werden, erzeugen sie weder eine Unwucht, noch ändert sich bei einer Verdrehung des Lagers dessen Massenverteilung, was insbesondere bei der um eine weitere Drehachse rotierenden Nabe zur Vermeidung einer Unwucht bezüglich dieser "übergeordneten" Drehachse wichtig ist.

Es liegt im Rahmen der Erfindung, dass der Abstand zwischen den beiden Scheiben etwa der Höhe des Innenrings entspricht oder geringfügig größer ist als jener. Durch eine derartige Dimensionierung kann auch in axialer Richtung ein Spalt zwischen den beiden, gegeneinander verdrehbaren Baugruppen - jeweils Ring und Scheibe - eingehalten werden, was einer leichtgängigen Relativverdrehbarkeit zwischen beiden Baugruppen förderlich ist.

Die Erfindung sieht weiterhin vor, dass die Planetenräder zwischen den beiden Scheiben fliegend, d.h. steglos, gelagert sind. Dadurch kann sich ein Planetenrad über die gesamte axiale Bauhöhe des Hohlraums zwischen den beiden Scheiben erstrecken, wodurch die lokale Druckbelastung der Zahnflanken auf das technisch mögliche Minimum reduziert ist, während gleichzeitig auch die Bauhöhe des Lagers so gering als möglich bleibt.

Zur fliegenden Lagerung der Planetenräder werden dieselben zwischen den beiden Scheiben geführt. Dabei gleiten die Stirnseiten der Planetenräder an den Innenseiten der beiden Scheiben entlang. Um die dabei auftretende Reibung zu minimieren, sieht die Erfindung weiterhin vor, dass die Scheiben an ihren Innenseiten und/oder die Planetenräder an ihren Stirnseiten einen reibungsmindernden Belag aufweisen.

Weitere Vorteile ergeben sich dadurch, dass die Planetenräder hohl ausgebildet sind und eine etwa zylindermantelförmige Gestalt aufweisen. Dadurch wird nicht unerheblich Gewicht gespart; insbesondere wenn die Durchmesser von Innenverzahnung und Sonnenrad erheblich voneinander abweichen und die Planetenräder demzufolge sehr groß sind. Außerdem wird dadurch die Reibung zwischen den Planetenrädern und den Scheiben weiter reduziert.

Zum Anschluß und/oder zur Lagerung des Sonnenrades kann wenigstens eine Scheibe eine zentrale Ausnehmung aufweisen. Dort kann die Antriebsleistung von einem außen installierten Motor in das Getriebe hineingeführt werden.

Im Rahmen einer ersten Ausführungsform der Erfindung verfügt das Sonnenrad über einen Anschluß für die Motorwelle eines zur Drehachse des Lagers konzentrischen Antriebsmotors aufweist. Hierzu kann das Sonnenrad eine axiale Ausnehmung aufweisen, bspw. in Form einer Sackloch- oder Durchgangsbohrung. Wenn diese Ausnehmung durch eine damit fluchtende Ausnehmung in einer Scheibe von außen zugänglich ist, kann die Abtriebswelle eines Antriebsmotors dort in das Sonnenrad eingesteckt und bspw. mittels einer Feder verdrehfest fixiert werden.

Schließlich entspricht es der Lehre der Erfindung, dass das Sonnenrad eine (zusätzliche) Verzahnung aufweist zum kämmenden Eingriff mit einem Antriebsritzel oder einer Antriebsschnecke, insbesondere jenseits des Hohlraums zwischen den beiden Scheiben. Dadurch kann einerseits eine weitere Untersetzung bewirkt werden, da der Durchmesser einer derartigen (zusätzlichen) Verzahnung deutlich größer sein kann als der Durchmesser eines Ritzels, bzw. da ein Schneckenantrieb eine extreme Untersetzung mit sich bringt; andererseits kann das Sonnenrad solchenfalls die Gestalt einer vollständig mittenfreien Hülse aufweisen, also sozusagen eine zwischen seinen beiden Stirnseiten vollständig hindurchgehende Ausnehmung aufweisen. Dies erlaubt das Hindurchführen von Kabeln od. dgl. durch die Lagerung, bspw. um Stromkabel von der Gondel nach unten in den Turm zu verlegen.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen Schnitt durch ein erfindungsgemäßes Blatt- oder Maschinenhauslager einer Windkraftanlage entlang der Drehachse des Lagers;
- Fig. 2: einen Schnitt durch das Blatt- oder Maschinenhauslager aus Fig. 1 quer zu dessen Drehachse;
- Fig. 3: einen vergrößerten Ausschnitt aus der Schnittansicht des Lagers gemäß Fig. 1;
- Fig. 4: eine abgewandelte Ausführungsform der Erfindung in einer der Fig. 1 entsprechenden Darstellung, mit angeflanschtem Antriebsmotor;
- Fig. 5: eine andere Ausführungsform der Erfindung in einer der Fig. 3 entsprechenden Darstellung; sowie
- Fig. 6: eine nochmals abgewandelte Ausführungsform der Erfindung in einer der Fig. 3 entsprechenden Darstellung.

Die in der Zeichnung wiedergegebenen Lager 1, 1' sind konzipiert für den Einsatz als Blatt- oder Maschinenhauslager einer Windkraftanlage.

Ein Blattlager verbindet ein Rotorblatt mit der Nabe des Windrades einer Windkrafanlage und erlaubt es, den Anstellwinkel des betreffenden Rotorblattes an die aktuelle Windstärke anzupassen. Seine Drehachse ist parallel zur Längsachse des betreffenden Rotorblattes und radial bezüglich der Drehachse der Rotornabe. Ein erfindungsgemäßes Blattlager kann mit diesen beiden Komponenten einer Windkraftanlage verbunden werden, welche jedoch in der Zeichnung nicht wiedergegeben sind.

Durch ein Maschinenhauslager wird die Gondel oder das Maschinenhaus um eine vertikale Achse drehbar auf dem oberen Ende des Turms einer Windraftanlage festgelegt. Dadurch kann die Ausrichtung des Windrades stets der aktuellen Windrichtung angepaßt werden. Ein erfindungsgemäßes Maschinenhauslager kann mit diesen beiden Komponenten einer Windkraftanlage verbunden werden, die jedoch in der Zeichnung nicht wiedergegeben sind.

Üblicherweise hat ein Maschinenhauslager zwar einen größeren Durchmesser und eine größere Tragfähigkeit als ein Blattlager der selben Windkraftanlage, da es die Summe der Windkräfte auf mehrere Rotorblätter sowie das Gewicht des Windrades und der Gondel tragen muß.

Abgesehen von der abweichenden Größenordnung haben beide Lagertypen jedoch eine Reihe von Gemeinsamkeiten: Beide Lagertypen - Blattlager einerseits und Maschinenhauslager andererseits - werden nicht kontinuierlich gedreht, sondern nur in Abhängigkeit von Windrichtung und -stärke verstellt. Bei gleichmäßiger Windrichtung und -geschwindigkeit werden sie nur wenig oder gar nicht verdreht. Eine Verdrehung erfolgt langsam, zumeist über einen Elektromotor. Die bei einer Verstellung aufzubringenden Kräfte sind fast ausschließlich Trägheitskräfte und damit vergleichsweise gering gegenüber den statisch auftretenden Gewichts- und/oder Windkräften.

Da somit die Strukturen dieser beiden Lagertypen grundsätzlich identisch sind, werden sie in der Zeichnung nicht unterschieden, d.h., die dargestellten Lager 1,1' können bei entsprechender Auslegung sowohl als Blattlager als auch als Maschinenhauslager einer Windkraftanlage verwendet werden.

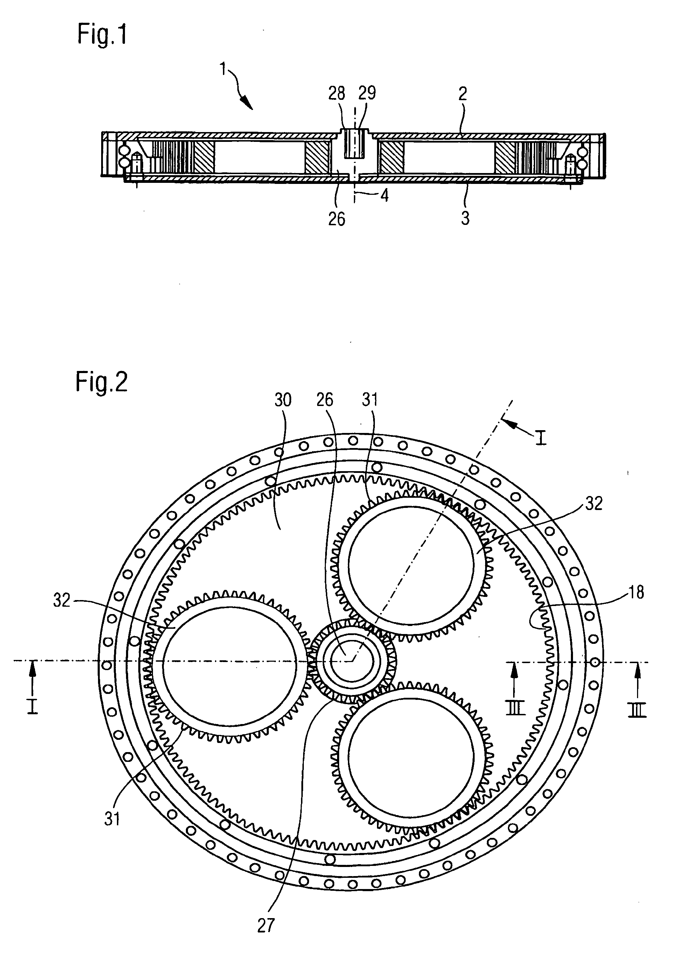

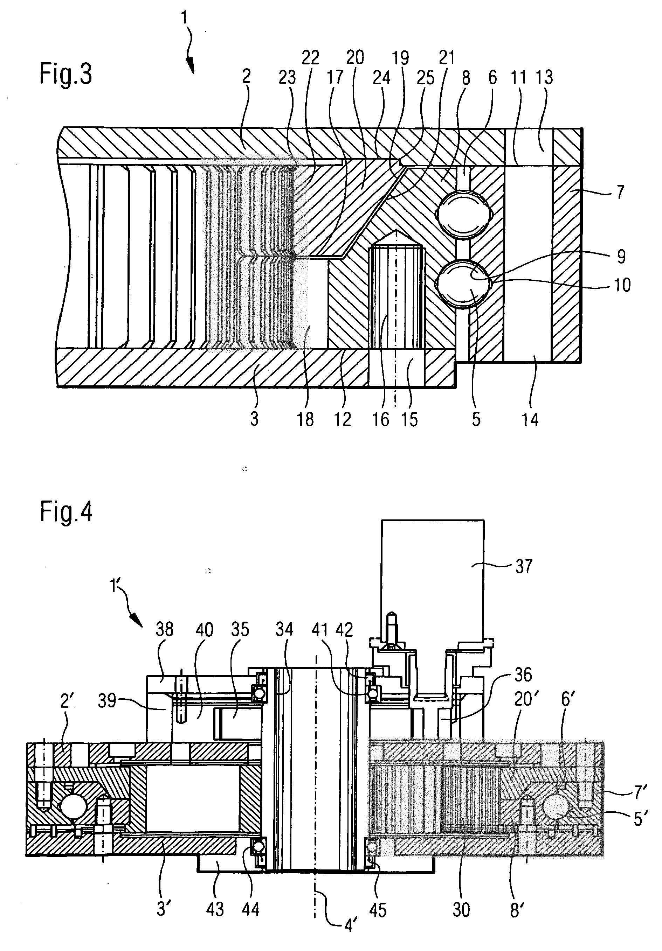

Wie man an den Fig. 1 und 4 erkennen kann, ist sind markante Elemente dieser Lager 1,1' jeweils zwei kreisring- oder kreisscheibenförmige Platten 2,2' bzw. 3,3', welche parallel zueinander sowie konzentrisch zu der Drehachse 4 des betreffenden Lagers 1,1' angeordnet sind und das betreffende Lager 1,1' oben bzw. unten abschließen. In dem Zwischenraum zwischen beiden Platten 2,2' befindet sich die eigentliche Lagerung.

Bei der Ausführungsform nach den Fig. 1 bis 3 ist ein doppelreihiges Kugellager vorgesehen mit kugelförmigen Wälzkörpern 5, die in einem Spalt 6 zwischen zwei Lagerringen, einem äußeren Lagerring 7 und einem inneren Lagerring 8 abrollen. Dafür sind an den dem Spalt 6 zugewandten Seiten der Lagerringe 7, 8 Laufbahnen jeweils Laufbahnen 9 vorgesehen, insbesondere in den Grundkörper des betreffenden Rings direkt eingearbeitet. Bei der dargestellten Ausführungsform weisen diese Laufbahnen 9 jeweils einen konkav gewölbten Querschnitt auf, der etwa mittig durch einen rundum laufenden Einstich 10 in einen oberen und einen unteren Bereich unterteilt ist. Jeder dieser beiden Querschnittsbereiche folgt einer Kreislinie, deren Wölbungsradius geringfügig größer ist als der Radius der kugelförmigen Wälzkörper 5. Dadurch ergeben sich pro Wälzkörper-Kugel 5 und Lagerring 7, 8 jeweils 2 Berührungspunkte, entsprechend einem Vierpunktlager.

An dieser Stelle sei vermerkt, dass die Verwendung eines zweireihigen Lagers mit kugelförmigen Wälzkörpern 5 bei der vorliegenden Erfindung nicht zwingend ist; stattdessen oder zusätzlich können auch zylinder-, tonnen-, kegel- oder nadelförmige Wälzkörper Verwendung finden. Ein einreihiges Kugellager ist bspw. in Fig. 4 dargestellt; bei Rollenlagern werden üblicherweise drei Reihen vorgesehen, die entlang der beiden Flanken und der Stirnseite eines in dem Spalt 6 angeordneten, rundum laufenden Bundes des einen Lagerrings 7,8 einerseits entlanglaufen sowie einer diesen Bund mit Abstand umgebenden Nut des jeweils anderen Lagerrings 8,7 andererseits.

Wie Fig. 3 gut erkennen läßt, haben beide Lagerringe 7, 8 eine ebene Ober- und/oder Unterseite. Während die ebene Oberseite 11 eines Lagerrings 7 bündig an der ebenfalls ebenen Innenseite der oberen Platte 2 anliegt, sitzt die ebene Unterseite 12 des anderen Lagerrings 8 an der ebenen Innenseite der unteren Platte 3 auf. Um diese jeweils aneinanderstoßenden Elemente 2,7;3,8 drehfest miteinander zu verbinden, sind in diesen Elementen jeweils kranzförmig um die Lagerdrehaschse 4 verteilte, zur Lagerdrehachse 4 parallele Bohrungen 13,14;15,16 angeordnet, welche dank entsprechender Anzahl und Abstände jeweils paarweise miteinander fluchten, so dass mittels dort hindurchgesteckter Schrauben, Gewindebolzen od. dgl. jeweils eine Lagerplatte 2,3 mit jeweils einem Lagerring 7,8 drehfest verbunden werden kann. Natürlich wäre auch eine integrale Herstellung jeweils einer Lagerplatte 2,3 und je eines Lagerrings 7,8 denkbar; dies wäre jedoch technologisch sehr aufwändig und dürfte daher in der Praxis eher selten anzutreffen sein, obgleich diese Variante grundsätzlich nicht ausgeschlossen ist.

Wie Fig. 3 weiter erkennen läßt, erstreckt sich der innere Lagerring 8 in axialer Richtung zwischen den beiden Innenseiten der Lagerplatten 2,3, ist jedoch nur mit einer von beiden verbunden. Zu der anderen gibt es einen kleinen Abstand, so dass die dortige Lagerplatte 2 samt dem damit verbundenen Außenring 7 sich gegenüber der Baugruppe aus Innenring 8 und Lagerplatte 3 leichtgängig verdrehen kann.

Gemäß Fig. 3 ist die Innenseite des radial inneren Lagerrings 8 durch eine horizontale, etwa mittig zwischen den beiden Platten 2,3 verlaufende Ebene 17 strukturell in zwei Bereiche untergliedert: Während der in Fig. 3 untere Bereich mit einer geraden Innenverzahnung 18 versehen ist, die in den an dieser Stelle hohlzylindrischen Lagerring 8 eingearbeitet ist, weicht oder springt de obere Bereich demgegenüber radial nach außen zurück. Bei der Ausführungsform gemäß Fig. 3 verläuft dieser Rücksprung entlang einer Kegelfläche 19, welche sich von oben nach unten radial zur Drehachse hin verjüngt. Der Öffnungswinkel dieser auf der Spitze stehenden Kegelfläche 19 liegt in der Größenordnung von etwa 60°.

Durch diese nach oben verstärkt nach außen zurückweichende Kegelfläche 19 ist Platz geschaffen für ein weiteres, ringförmiges Teil 20, dessen radiale Außenseite 21 als Pendant zu der Kegelfläche 19 gestaltet ist. Die zylindrische Innenfläche dieses Rings 20 ist mit einer geraden Innenverzahnung 22 versehen, die in die hohlzylindrische Innenseite des Rings 20 eingearbeitet ist. Die radial innen liegenden, geraden Stirnseiten der Zähne 18,22 haben gleiche Abstände r_{H} zu der Drehachse 4.

Dieses ringförmige Teil 20 hat eine im Wesentlichen trapezförmige Gestalt, an deren horizontal verlaufender Oberseite 23 ein flacher, rundum laufender Bund 24 angeformt ist. Dieser greift formschlüssig in eine rundum laufende Auskehlung 25 oder Nut an der Unterseite 11 der oberen Lagerplatte 2 ein und ist dadurch daran zentriert. Er ist ferner mit der Lagerplatte 2 drehfest verbunden, wahlweise durch Klemmung, Verklebung, Verschweißung od. dgl.

Aus alledem resultiert eine Struktur, wobei innerhalb des inneren Lagerrings 8 übereinander zwei Innenverzahnungen 18,22 vorgesehen sind, wobei der untere Verzahnungsbereich 18 mit dem Innenring 8 und der in Fig. 3 unteren Lagerplatte 3, der obere Verzahnungsbereich 22 dagegen über die obere Lagerplatte 2 drehfest mit dem Außenring 7 verbunden ist. An dieser Stelle sei vermerkt, dass die beiden Verzahnungen 18,22 geringfügig voneinander abweichende Zähnezahlen z₁, z₂ aufweisen, also |z₁-z₂| > 0.

Im Zentrum des Lagers 1, konzentrisch zu der Drehachse 4, befindet sich ein Sonnenrad 26 mit einem Radius r_{S}, welches an einer oder vorzugsweise beiden Lagerplatten 2,3 um die Drehachse 4 drehbar gelagert ist und an seiner Außenseite mit einer rundum laufenden Stirnverzahnung 27 versehen ist. An oder in einer von außen zugänglichen Stirnseite 28 des Sonnenrades 26 ist eine Aufnahme 29 für eine Abtriebswelle eines Antriebsmotors vorgesehen, bspw. mit einer Nut zum Einlegen einer Feder. Das Gehäuse eines derartigen Antriebsmotors kann an der betreffenden Lagerplatte 2 festgelegt, insbesondere angeflanscht werden, ggf. auch über ein zwischengeschaltetes Getriebe, insbesondere Untersetzungsgetriebe. Die Verzahnung 27 des Sonnenrades 26 erstreckt sich im Wesentlichen über die gesamte achsparallele Höhe des Zwischenraums zwischen den beiden Lagerplatten 2,3.

Infolge des zentralen Sonnenrades 26 hat der zwischen den Lagerplatten 2,3 und den beiden Innenverzahnungen 18,22 effektiv verbleibende Hohlraum 30 eine ringförmige Gestalt mit einer radialen Erstrecken e = r_{H}-r_{S}. In diesem ringförmigen Hohlraum 30 laufen mehrere, mit je einer Stirnverzahnung 31 versehene Planetenräder 32 um, deren Durchmesser d etwas größer ist als die radiale Erstreckung e des ringförmigen Hohlraums 30, also d-e > 0, so dass alle Planetenräder 32 jeweils sowohl mit dem Sonnenrad 26 als auch mit den beiden Innenverzahnungen 18,22 kämmen.

Die Planetenräder 32 sind zwischen ihren beiden Stirnseiten durchgehend hohl ausgebildet mit einer vergleichsweise dünnen Wandstärke w, die vorzugsweise gleich oder kleiner ist als ¼ des Durchmessers d der Planetenräder 31: w ≤ ¼ * d, bevorzugt gleich oder kleiner als 1/6 des Durchmesser d der Planetenräder 31: w ≤ d/6, insbesondere gleich oder kleiner als 1/8 des Durchmesser d der Planetenräder 31: w ≤ d/8. Dadurch sind die Planetenräder 32 sehr leicht, und in ihrem Inneren befinden sich große Hohlräume zur Aufnahme eines Schmiermittels, bspw. Schmierfett.

Ferner sind die Planetenräder 32 zwischen den beiden Lagerplatten 2,3 fliegend, d.h. steglos, gelagert. Zu diesem Zweck können die Innenseiten der Lagerplatten 2,3 und/oder die Stirnseiten der Planetenräder 32 mit einem reibungsvermindernden Belag versehen sein, bspw. aus Teflon od. dgl.

Die Wirkungsweise der Anordnung ist wie folgt: Da das Gehäuse des Antriebsmotors an einer Lagerplatte 2 festgelegt ist, seine Abtriebsachse dagegen an dem Sonnenrad 26, ist bei Drehantrieb des Sonnenrades 26 durch den Antriebsmotor eine Relativverdrehung v zwischen Sonnenrad 26 und zumindest einer Innenverzahnung 22 ungleich 0: v ≠ 0; also ist ein gemeinsamer Umlauf von Sonnenrad 26, Planetenrädern 32 und den die Innenverzahnungen 18,22 tragenden Ringen 7,8 nicht möglich. Vielmehr werden die Planetenräder 32 in Drehung um ihre jeweilige Achse versetzt und wälzen sich demzufolge an den beiden Innenverzahnungen 18,22 ab.

Da sich die Zähnezahlen z₁, z₂ der beiden Innenverzahnungen 18,22 - wenn auch geringfügig - voneinander unterscheiden, legen die Planetenräder 32 bei einem kompletten Relativ-Umlauf gegenüber einer Innenverzahnung 18 einen Relativ-Winkel a = 360° zurück, entsprechend α = z₁ * 360°/z₁; gleichzeitig ist der Relativ-Winkel β gegenüber der anderen Innenverzahnung 22 jedoch β = z₁ * 360°/z₂ ≠ 360° wegen z₁ ≠ z₂. Also folgt daraus eine Relativ-Verdrehung beider Innenverzahnungen 18,22 gegeneinander um α - β = z₁ * 360°/z₁ - z₁ * 360°/z₂ = 360° * (1 - z₁/z₂) = 360° * (z₂/z₂ - z₁/z₂) = 360° * (z₂-z₁)/z₂. Je geringer also Δz = z₂-z₁ im Verhältnis zu z₁ bzw. z₂, umso größer wird die Untersetzung des Getriebes, bestehend aus Sonnenrad 26, Planetenrädern 32 und Innenverzahnungen 18,22, und desto kleiner kann die Nennleistung des Antriebsmotors gewählt werden. Allerdings gibt es für Δz = z₂-z₁ eine untere Grenze, die aus der Anzahl p der Planetenräder 32 und deren gemeinsamen Eingriffs mit dem Sonnenrad 26 einerseits und mit den bereichsweise gegeneinander versetzten Innenverzahnungen 18,22 andererseits resultiert, nämlich: Δz ≥ p, insbesondere Δz = k*p, mit k = 1, 2, 3 ... Sofern diese Bedingung erfüllt ist, hat der fortschreitende Zahnversatz zwischen den Innenverzahnungen 18,22 am Eingriffspunkt der Planetenräder 32 jeweils gerade einen oder mehrere Zähne erreicht, und an den Eingriffsstellen fluchten die dortigen Zähne beider Innenverzahnungen 18,22.

In Fig. 4 ist eine andere Ausführungform eines erfindungsgemäßen Lagers 1' dargestellt, welches im Gegensatz zu dem Lager 1 mittenfrei ist, also im Zentrum eine Durchführung von Kabeln, etc. ermöglicht, bspw. auch einen Durchstieg einer Person im Falle eines Maschinenhauslagers. Obzwar die Grundstruktur die selbe ist wie bei dem Lager 1, gibt es doch eine Reihe von Unterscheidungsmerkmalen:

Zum Einen hat der die obere Verzahnung 22 tragende Ring 20' in diesem Fall nicht einen trapezförmigen Querschnitt, sondern ist im wesentlichen scheibenförmig bzw. ringscheibenförmig gestaltet und zwischen der oberen Platte 2' und dem Außenring 7' eingefügt. Alle drei Elemente 2',7',20' weisen miteinander fluchtende Bohrungen auf und werden durch dahinein gesteckte Schrauben, Bolzen od. dgl. drehfest miteinander verbunden. Dies ist einfacher und wirkungsvoller als das Verklemmen, Verkleben oder Verschweißen des Rings 20 mit der Platte 2 bei der Lager-Ausführungform 1. Die axiale Bauhöhe der beiden Lagerringe 7',8' selbst ist in diesem Fall natürlich kleiner als der Abstand zwischen den beiden Lagerplatten 2',3'.

Ein weiterer Unterschied zu der zuvor beschriebenen Ausführungsform 1 besteht darin, dass die mit dem inneren Ring 8' verbundene Lagerplatte 3' radial bis unter bzw. über den äußeren Ring 7' verbreitert ist, so dass der Spalt 6' zwischen beiden Lagerringen 7',8' davon überdeckt ist. In dem mit dem äußeren Ring 7' überlappenden Bereich der entsprechend verbreiterten Lagerplatte 3' können ein oder mehrere Dichtungen angeordnet sein. Zu diesem Zweck sind bei der Ausführungsform 1' nach Fig. 4 in dem außen überlappenden Bereich der Innenseite der betreffenden Lagerplatte 3' ein oder mehrere rundum laufende Nuten 33 vorgesehen sein, zur Einlage je eines Dichtungsrings.

Die bisher beschriebenen Merkmale der Ausführungsform 1' ließen sich grundsätzlich auch bei der Lagerausführungsform 1 nach den Fig. 1 bis 3 verwenden.

Die Mittenfreiheit des Lagers 1' wird dagegen dadurch bewirkt, dass dort anstelle eines mehr oder weniger massiven Sonnenrades 26 ein Rohr 34 verwendet wird, welches das Lager 1' zwischen dessen beiden Lagerplatten 2',3' komplett durchsetzt und mindestens auf Höhe des Zwischenraums 30 zwischen beiden Lagerplatten 2',3' mit einer Außenverzahnung versehen ist.

Wie Fig. 4 weiter zeigt, ist dieses Rohr 34 deutlich länger als die axiale Erstreckung des Lagers 1', gemessen über dessen Lagerplatten 2',3'. Insbesondere auf der Antriebsseite, also in Fig. 4 oben, überragt das Rohr 34 die dortige Platte 2' deutlich; oberhalb bzw. außerhalb dieser Platte 2' ist auf dem Rohr 34 ein Zahnrad 35 aufgesteckt und drehfest fixiert. Mit diesem kämmt ein Ritzel 36 eines Antriebsmotors 37, welcher selbst gegenüber der Drehachse 4' exzentrisch angeordnet ist und daher den Durchtritt von Kabeln, etc. durch das Rohr 34 nicht behindert.

Das Gehäuse des Antriebsmotors 37 ist an einem Lagerschild 38 für das nächstgelegene, in Fig. 4 das obere Ende des Rohrs 34 verankert, insbesondere angeschraubt. Vorzugsweise liegt dieser Lagerschild 38 nicht direkt an der betreffenden Lagerplatte 2' an, sondern ist durch einen Ring 39 davon beabstandet. In dem dadurch geschaffenen Hohlraum 40 zwischen Lagerplatte 2', Lagerschild 38 und Abstandsring 39 findet sowohl das Zahnrad 35 Platz als auch das damit kämmende Ritzel 36 des Antriebsmotors 37. Zwischen der hohlzylindrisch gewölbten Innenseite einer Ausnehmung im Zentrum des ringförmigen Lagerschildes 38 und dem Rohr 34 befindet sich ein Wälzlager 41 einerseits sowie eine Dichtung 42 andererseits.

Ein zweiter Lagerschild 43 ist an der gegenüber liegenden Lagerplatte 3' fixiert, jedoch dort vorzugsweise ohne einen Abstandsring. Auch zwischen der hohlzylindrisch gewölbten Innenseite einer Ausnehmung im Zentrum des zweiten, ebenfalls ringförmigen Lagerschildes 43 und dem Rohr 34 gibt es sowohl ein Wälzlager 44 als auch eine Dichtung 45.

Bei einer indirekten Ankopplung des Antriebsmotors 37 aus Fig. 4 ergibt sich durch unterschiedliche Durchmesser des Zahnrades 35 gegenüber dem Ritzel 36 eine zusätzliche Untersetzung, was die Verwendung eines Antriebsmotors 37 mit weiter reduzierter Nenneistung erlaubt.

Obzwar die Ausführungsform 1' in Fig. 4 kompakter dargestellt ist als die Ausführungsform 1 aus Fig. 1, könnten beide Ausführungsformen grundsätzlich auch mit den Abmessungen der jeweils anderen Ausführungsform 1,1' gefertigt werden.

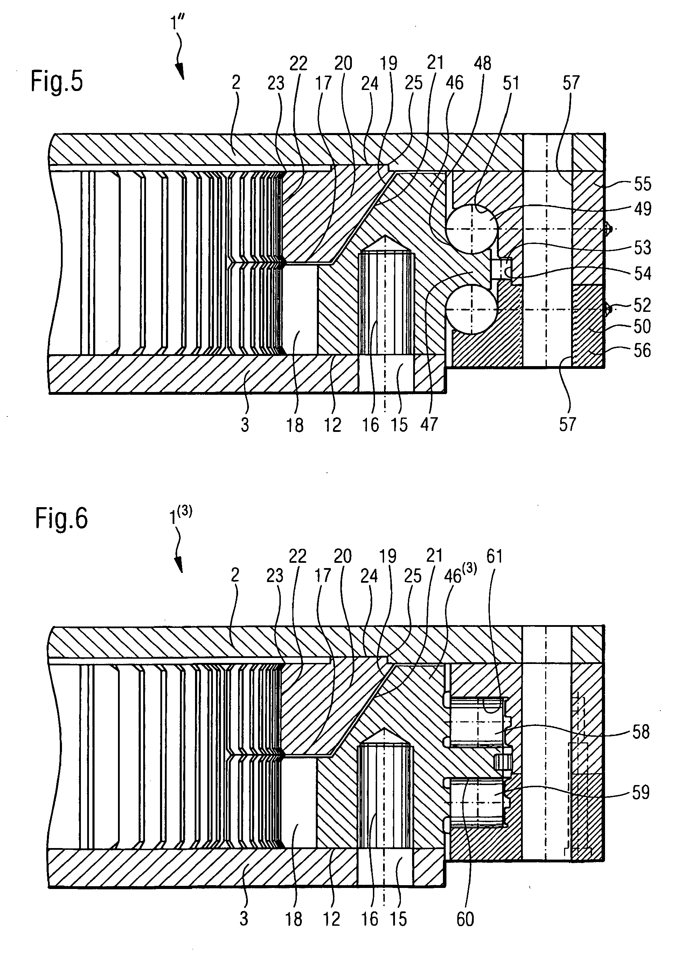

In den Fig. 5 und 6 sind weitere Ausführungsformen der Erfindung wiedergegeben. Diese unterscheiden sich von der Ausführungsform gemäß Fig. 1 bis 3 vor allem in der Ausgestaltung der Wälzlagerung.

Während bei der Ausführungsform 1 nach den Fig. 1 bis 3 ein doppelreihiges Vierpunktlager vorgesehen ist, wobei die Wälzkörper 5 zwischen Laufbahnen 9 in etwa (hohl-) zylindrischen Begrenzungsflächen des Spaltes 6 abrollen, ist bei der Ausführungsform 1" nach Fig. 5 an dem dem Spalt 6 zugewnadten Umfang eines Lagerrings - im dargestellten Fall des radial inneren Lagerrings 46 - ein rundum laufender Bund 47 vorgesehen, dessen Querschnitt an seiner Ober- und Unterseite jeweils über eine konkave Querwölbung mit vorzugsweise etwa konstantem Querwölbungsradius stetig und bevorzugt auch differenzierbar in den anschlißenden (hohl-) zylindrischen Verlauf des betreffenden Lagerrings - hier des radial inneren Lagerrings 46 - übergeht. Die dadurch geschaffene Hohlkehle dient jeweils als Laufbahn 48 für je eine Reihe von kugelförmigen Wälzkörpern 49, welche ganz oder überwiegend der Übertragung von Axialkräften zwischen beiden Lagerringen 46, 50 dienen und zu diesem Zweck an dem jeweils anderen Lagerring 50 ebenfalls je eine Laufbahn 51 vorfinden, die einen vergleichbaren Querwölbungsradius aufweist und sich damit wie die erste Laufbahn 48 optimal den daran entlang rollenden Wälzkörpern 49 anschmiegt. Jeder dieser Wälzkörperreihen 49 können jeweils ein oder mehrere Schmiernippel 52 zugeordnet sein, über welche die betreffende Wälzkörperreihe 49 mir Schmierfett versorgt wird.

Die Übertragung von Radialkräften zwischen den Lagerringen 46, 50 übernimmt eine weitere Reihe von Wälzkörpern 53, welche sich in axialer Richtung vorzugsweise etwa mittig zwischen den beiden anderen Wälzkörperreihen 49 befindet. Es kann sich hierbei ggf. um Zylinderrollen 53 handeln, welche an der freien Stirnseite des umlaufenden Bundes 47 einerseits und dem jenem gegenüber liegenden, (hohl-) zylindrischen Abschnitt 54 des anderen Lagerrings 46, 50 abrollen, wobei ihre Rotationsachsen parallel zu der Drehachse der Lagerausführungsform 1" ausgerichtet sind, also in axialer Richtung.

Der jeweils andere Lagerring 50, 46 umgreift den Bund 47 des ersten Lagerrings 46, 50. Damit dennoch eine Montage möglich ist, ist jeweils der Lagerring 50, 46 ohne Bund 47 in zwei Ringe 55, 56 unterteilt, welche in axialer Richtung hinter- bzw. übereinander liegen und beim Zusammenbau getrennt von zwei Seiten her über den mit Bund 47 versehenen Ring 46, 50 gestülpt werden können. Beide Ringe 55, 56 liegen in fertig zusammengebautem Zustand flächig aneinander an und weisen jeweils miteinander fluchtende Befestigungsbohrungen 57 auf, zum Hindurchstecken von Befestigungsschrauben, (Steh-) Bolzen od. dgl.

Die Ausführungsform 1⁽³⁾ unterscheidet sich von der zuletzt beschriebenen Bauform 1" vor allem dadurch, dass im Rahmen der Axiallager anstelle von kugelförmigen Wälzkörpern 53 Rollen 58 verwendet werden, wobei die Rotationsachsen 59 jeweils einer Rollenreihe innerhalb einer gemeinsamen Ebene liegen und außerdem jeweils radial von der Lagerdrehachse weg streben. Dementsprechend sind die zugeordneten Laufbahnen 60, 61 in diesem Fall als ebene, ringförmige Scheiben ausgebildet.

**Bezugszeichenliste**

| | | | |
|---|---|---|---|
| 1 | Lager | 26 | Sonnenrad |
| 2 | Platte | 27 | Stirnverzahnung |
| 3 | Platte | 28 | Stirnseite |
| 4 | Drehachse | 29 | Aufnahme |
| 5 | Wälzkörper | 30 | Hohlraum |
| 6 | Spalt | 31 | Stirnverzahnung |
| 7 | Lagerring | 32 | Planetenrad |
| 8 | Lagerring | 33 | Nut |
| 9 | Laufbahn | 34 | Rohr |
| 10 | Einstich | 35 | Zahnrad |
| 11 | Oberseite | 36 | Ritzel |
| 12 | Unterseite | 37 | Antriebsmotor |
| 13 | Bohrung | 38 | Lagerschild |
| 14 | Bohrung | 39 | Abstandsring |
| 15 | Bohrung | 40 | Hohlraum |
| 16 | Bohrung | 41 | Wälzlager |
| 17 | Ebene | 42 | Dichtung |
| 18 | Innenverzahnung | 43 | Lagerschild |
| 19 | Kegelfläche | 44 | Wälzlager |
| 20 | ringförmiges Teil | 45 | Dichtung |
| 21 | radiale Außenseite | 46 | Lagerring |
| 22 | Innenverzahnung | 47 | Bund |
| 23 | Oberseite | 48 | Laufbahn |
| 24 | Bund | 49 | Wälzkörper |
| 25 | Auskehlung | 50 | Lagerring |
| 51 | Laufbahn | | |
| 52 | Schmiernippel | | |
| 53 | Wälzkörper | | |
| 54 | Abschnitt | | |
| 55 | Ring | | |
| 56 | Ring | | |
| 57 | Befestigungsbohrung | | |
| 58 | Rolle | | |
| 59 | Rotationsachse | | |
| 60 | Laufbahn | | |
| 61 | Laufbahn | | |

## Patentansprüche

1. Blatt- oder Maschinenhauslager (1;1';1";1⁽³⁾) einer Windkraftanlage mit zwei aneinander gelagerten und gegeneinander verdrehbaren Ringen (7,8;7',8') zum Anschluß an die Nabe der Windkraftanlage einerseits und an ein Blatt derselben andererseits, oder zum Anschluß am Turm der Windkraftanlage einerseits und an die Gondel derselben andererseits, wobei die beiden, gegeneinander verdrehbaren Ringe (7,8;7',8') mit je einer Scheibe (2,3;2',3') versehen oder gekoppelt sind, und mit je einer rundum laufenden Innenverzahnung (18,22:18',22') versehen oder drehfest gekoppelt sind, zwecks gemeinsamen Verzahnungseingriffs durch ein oder mehrere, um ein zentrales Sonnenrad (26,34) umlaufende, verzahnte Planetenräder (32;32'), welche ihrerseits mit dem verzahnten Sonnenrad (26,34) kämmen und zwischen den beiden Scheiben (2,3;2',3') fliegend, d.h. steglos, gelagert sind.

2. Blatt- oder Maschinenhauslager (1;1';1";1⁽³⁾) nach Anspruch 1, **dadurch gekennzeichnet, dass** jeder der beiden Ringe (7,8;7',8') mit je einer Kreisscheibe (2,3;2',3') versehen oder gekoppelt ist.

3. Blatt- oder Maschinenhauslager (1;1';1";1⁽³⁾) nach Anspruch 2, **dadurch gekennzeichnet, dass** die beiden Scheiben (2,3;2',3') an einander gegenüber liegenden, ebenen Stirnseiten je eines Ringes (7,8;7',8';46,50) festgelegt sind.

4. Blatt- oder Maschinenhauslager (1;1';1";1⁽³⁾) nach Anspruch 2 oder 3, **dadurch gekennzeichnet, dass** die beiden Scheiben (2,3;2',3') parallel zueinander angeordnet sind mit einem Abstand, der etwa der Höhe des Innenrings (8; 8';46) entspricht oder geringfügig größer ist als jener.

5. Blatt- oder Maschinenhauslager (1;1';1";1⁽³⁾) nach einem der Ansprüche 2 bis 4, **dadurch gekennzeichnet, dass** die Scheiben (2,3;2',3') an ihrer Innenseite einen reibungsmindernden Belag aufweisen.

6. Blatt- oder Maschinenhauslager (1;1';1";1⁽³⁾) nach einem der vorhergehenden Ansprüche, **dadurch gekennzeichnet, dass** die Planetenräder (32;32') hohl ausgebildet sind und eine etwa zylindermantelförmige Gestalt aufweisen.

7. Blatt- oder Maschinenhauslager (1;1';1";1⁽³⁾) nach einem der vorhergehenden Ansprüche, **dadurch gekennzeichnet, dass** wenigstens eine Scheibe (2,3;2',3') eine zentrale Ausnehmung aufweist zum Anschluß und/oder zur Lagerung des Sonnenrades (26;34).

8. Blatt- oder Maschinenhauslager (1;1';1";1⁽³⁾) nach einem der vorhergehenden Ansprüche, **dadurch gekennzeichnet, dass** das Sonnenrad (26;34) die Gestalt einer hohlen Hülse aufweist.

9. Blatt- oder Maschinenhauslager (1;1';1";1⁽³⁾) nach einem der vorhergehenden Ansprüche, **dadurch gekennzeichnet, dass** das Sonnenrad (26;34) einen Anschluß (29) für die Motorwelle eines zur Drehachse (4;4') des Lagers (1:1') konzentrischen Antriebsmotors aufweist.

10. Blatt- oder Maschinenhauslager (1;1';1";1⁽³⁾) nach einem der vorhergehenden Ansprüche, **dadurch gekennzeichnet, dass** das Sonnenrad (26;34) eine Verzahnung (35) aufweist zum kämmenden Eingriff mit einem Antriebsritzel (36) oder einer Antriebsschnecke, insbesondere jenseits des Hohlraums (30) zwischen den beiden Scheiben (2,3;2',3').

11. Blatt- oder Maschinenhauslager (1;1';1";1⁽³⁾) nach einem der vorhergehenden Ansprüche, **dadurch gekennzeichnet, dass** die beiden rundum laufenden Innenverzahnungen (18,22;18',22'))unterschiedliche Zähnezahlen aufweisen.

## Claims

1. A blade bearing or nacelle bearing (1; 1'; 1"; 1⁽³⁾) of a wind turbine, comprising two rings (7, 8; 7', 8') mounted adjacent to each other and rotatable relative to each other for connection on one side to the hub of the wind turbine and on the other side to a blade of same, or for connection on one side to the tower of the wind turbine and on the other side to the gondola of same, wherein the two rings (7, 8; 7', 8') rotatable relative to each other are provided with or coupled to a respective disk (2, 3; 2', 3') and are each provided with or non-rotatably coupled to a circumferential inner toothing (18, 22; 18', 22'), for the purpose of joint tooth engagement by one or more toothed planet gears (32; 32') revolving around a central sun gear (26, 34), which planet gears (32; 32') themselves are meshing with the toothed sun gear (26, 34) and are mounted between the two disks (2, 3; 2', 3') in cantilever fashion, i.e., without a planet carrier.

2. The blade bearing or nacelle bearing (1; 1'; 1"; 1⁽³⁾) according to claim 1, **characterized in that** each of the two rings (7, 8; 7', 8') is provided with or coupled to a respective circular disk (2, 3; 2', 3').

3. The blade bearing or nacelle bearing (1; 1'; 1"; 1⁽³⁾) according to claim 2, **characterized in that** the two disks (2, 3; 2', 3') are each fixed to mutually facing, planar end faces of a respective ring (7, 8; 7', 8'; 46, 50).

4. The blade bearing or nacelle bearing (1; 1'; 1"; 1⁽³⁾) according to claim 2 or 3, **characterized in that** the two disks (2, 3; 2', 3') are arranged parallel to each other with a distance between them that is approximately equal to or slightly greater than the height of the inner ring (8; 8'; 46).

5. The blade bearing or nacelle bearing (1; 1'; 1"; 1⁽³⁾) according to one of claims 2 to 4, **characterized in that** the disks (2, 3; 2', 3') each have a friction-reducing coating on their inner face.

6. The blade bearing or nacelle bearing (1; 1'; 1"; 1⁽³⁾) according to one of the preceding claims, **characterized in that** the planet gears (32; 32') are configured as hollow and have an approximately cylinder jacket shape.

7. The blade bearing or nacelle bearing (1; 1'; 1"; 1⁽³⁾) according to one of the preceding claims, **characterized in that** at least one disk (2, 3; 2', 3') has a central opening for the connection and/or mounting of the sun gear (26; 34).

8. The blade bearing or nacelle bearing (1; 1'; 1"; 1⁽³⁾) according to one of the preceding claims, **characterized in that** the sun gear (26; 34) has the shape of a hollow bushing.

9. The blade bearing or nacelle bearing (1; 1'; 1"; 1⁽³⁾) according to one of the preceding claims, **characterized in that** the sun gear (26; 34) has a connection (29) for the motor shaft of a drive motor concentric with the rotation axis (4; 4') of the bearing (1; 1').

10. The blade bearing or nacelle bearing (1; 1'; 1"; 1⁽³⁾) according to one of the preceding claims, **characterized in that** the sun gear (26; 34) has a toothing (35) for meshing engagement with a drive pinion (36) or a drive worm, particularly on the far side of the cavity (30) between the two disks (2, 3; 2', 3').

11. The blade bearing or nacelle bearing (1; 1'; 1"; 1⁽³⁾) according to one of the preceding claims, **characterized in that** the two circumferential inner toothings (18, 22; 18', 22') have different tooth counts.

## Revendications

1. Palier pour pales ou carter de moteur (1 ; 1' ; 1" ; 1⁽³⁾) d'une éolienne, comportant deux anneaux (7, 8, ; 7', 8') montés de manière adjacente et prouvant tour-ner l'un par rapport à l'autre, destinés à être assemblés au moyeu de l'éolienne, d'une part, et à une pale de celle-ci, d'autre part, ou destinés à être assemblés au mât de l'éolienne, d'une part, et à la nacelle de celle-ci, d'autre part, en ce que les deux anneaux (7, 8, ; 7', 8') rotatifs l'un par rapport à l'autre sont munis chacun d'un disque (2, 3, ; 2', 3') ou y sont couplés, et sont munis chacun d'une denture intérieure (18, 22, ; 18', 22') sur tout le pourtour ou sont couplés de manière solidaire en rotation, en vue d'un engrènement conjoint par l'intermédiaire d'une ou plusieurs roues planétaires (32 ; 32') dentées tournant autour d'une roue solaire centrale (26, 34) et engrenant, pour leur part, avec la roue solaire (26, 34) et qui sont montées en porte-à-faux, c'est-à-dire sans support, entre les deux disques (2, 3, ; 2', 3').

2. Palier pour pales ou carter de moteur (1 ; 1' ; 1" ; 1⁽³⁾) selon la revendication 1, **caractérisé en ce que** chacun des deux anneaux (7, 8 ; 7', 8') est muni respectivement d'un disque circulaire (2, 3 ; 2', 3') ou y est couplé.

3. Palier pour pales ou carter de moteur (1 ; 1' ; 1" ; 1⁽³⁾) selon la revendication 2, **caractérisé en ce que** les deux disques (2, 3 ; 2', 3') sont fixés sur les faces frontales planes opposées de chacun des anneaux (7, 8 ; 7', 8' ; 46, 50).

4. Palier pour pales ou carter de moteur (1 ; 1' ; 1" ; 1⁽³⁾) selon la revendication 2 ou 3, **caractérisé en ce que** les deux disques (2, 3 ; 2', 3') sont disposés parallèlement l'un par rapport à l'autre à une distance qui correspond approximativement à la hauteur de l'anneau intérieur (8 ; 8' ; 46) ou qui est légèrement supérieure à celle-ci.

5. Palier pour pales ou carter de moteur (1 ; 1' ; 1" ; 1⁽³⁾) selon l'une des revendications 2 à 4, **caractérisé en ce que** les disques (2, 3 ; 2', 3') comportent sur leur face intérieure un revêtement diminuant le frottement.

6. Palier pour pales ou carter de moteur (1 ; 1' ; 1" ; 1⁽³⁾) selon l'une des revendications précédentes, **caractérisé en ce que** les roues planétaires (32 ; 32') sont réalisées de manière creuse et présentent une forme approximativement cylindrique.

7. Palier pour pales ou carter de moteur (1 ; 1' ; 1" ; 1⁽³⁾) selon l'une des revendications précédentes, **caractérisé en ce qu'**au moins un disque (2, 3; 2', 3') comporte un évidement central destiné au raccordement et/ou au montage de la roue solaire (26 ; 34).

8. Palier pour pales ou carter de moteur (1 ; 1' ; 1" ; 1⁽³⁾) selon l'une des revendications précédentes, **caractérisé en ce que** la roue solaire (26 ; 34) a la forme d'un manchon creux.

9. Palier pour pales ou carter de moteur (1 ; 1' ; 1" ; 1⁽³⁾) selon l'une des revendications précédentes, **caractérisé en ce que** la roue solaire (26 ; 34) comporte un raccordement (29) pour l'arbre moteur d'un moteur d'entraînement concentrique par rapport à l'axe de rotation (4 ; 4') du palier (1 ; 1').

10. Palier pour pales ou carter de moteur (1 ; 1' ; 1" ; 1⁽³⁾) selon l'une des revendications précédentes, **caractérisé en ce que** la roue solaire (26 ; 34) comporte une denture (35) pour l'engrènement avec un pignon d'entraînement (36) ou avec une vis sans fin d'entraînement, en particulier au-delà de la cavité (30) entre les deux disques (2, 3 ; 2', 3').

11. Palier pour pales ou carter de moteur (1 ; 1' ; 1" ; ;1⁽³⁾) selon l'une des revendications précédentes, **caractérisé en ce que** les deux dentures intérieures (18, 22 ; 18', 22') sur tout le pourtour comporte différents nombres de dents.
